(19) **Europäisches Patentamt European Patent Office Office européen des brevets**

(11) **EP 4 105 554 B1**

(12) **EUROPEAN PATENT SPECIFICATION**

(45) Date of publication and mention
of the grant of the patent:
**05.11.2025 Bulletin 2025/45**

(21) Application number: **21753499.9**

(22) Date of filing: **03.02.2021**

(51) International Patent Classification (IPC):
*F23L 15/00* (2006.01)    *F23L 15/02* (2006.01)
*F23C 3/00* (2006.01)    *F23C 9/08* (2006.01)
*F23C 99/00* (2006.01)    *F23D 14/12* (2006.01)

(52) Cooperative Patent Classification (CPC):
**F23C 3/002; F23D 14/12; F23D 14/22; F23D 14/58; F23L 15/04;** Y02E 20/34

(86) International application number:
**PCT/JP2021/003975**

(87) International publication number:
**WO 2021/161875 (19.08.2021 Gazette 2021/33)**

(54) **RADIANT TUBE BURNER, RADIANT TUBE, AND METHOD FOR DESIGNING RADIANT TUBE BURNER**

STRAHLROHRBRENNER, STRAHLROHR UND VERFAHREN ZUM ENTWERFEN EINES STRAHLROHRBRENNERS

BRÛLEUR À TUBE RADIANT, TUBE RADIANT ET PROCÉDÉ DE CONCEPTION DE BRÛLEUR À TUBE RADIANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2020 JP 2020020549**

(43) Date of publication of application:
**21.12.2022 Bulletin 2022/51**

(73) Proprietor: **JFE Steel Corporation Tokyo 100-0011 (JP)**

(72) Inventors:
• **KAWASHIMA Tomoyuki**
  **Tokyo 100-0011 (JP)**
• **KOBAYASHI Akihiro**
  **Tokyo 100-0011 (JP)**
• **OZAWA Noriko**
  **Tokyo 100-0011 (JP)**

(74) Representative: **Hoffmann Eitle Patent- und Rechtsanwälte PartmbB Arabellastraße 30 81925 München (DE)**

(56) References cited:
WO-A1-2012/098848    WO-A1-2014/027610
WO-A1-2018/034286    CN-U- 202 132 950
CN-U- 202 660 558    JP-A- 2016 161 221
JP-A- H04 126 905    JP-A- S6 446 516
JP-U- H0 285 207

## Description

Technical Field

The present invention is a technology relating to a radiant tube.

Background Art

The radiant tube is a device for supplying fuel gas and combustion air into a tube from a gas injection unit of a radiant tube burner for combustion, and indirectly heating an object to be heated present outside the tube by heat generated by the tube heated by the generated combustion gas. Therefore, in the radiant tube, the heat cannot be effectively used by the radiant tube alone due to a limited combustion space, and thus heat recovery is performed in the form of preheating of the combustion air using various exhaust heat recovery devices, such as a recuperator and a heat storage burner, in many cases.

Herein, in the radiant tube, the combustion gas generated in the tube passes through the inside of the tube to be discharged. However, the radiant tube has a problem that, when the temperature of the combustion gas rises, the generation amount of harmful nitrogen oxides (hereinafter referred to as NOx) increases. Therefore, the exhaust heat recovery amount is sometimes limited to reduce the NOx emission amount.

Conventionally, as a technology of reducing the generation of NOx in the radiant tube, the technologies described in PTL 1 and PTL 2 are mentioned, for example.

PTL 1 discloses a technology of reducing the generation of NOx by reducing the combustion rate by mixing exhaust gas with fuel gas or secondary combustion air using a fan. Further, PTL 2 discloses purifying the generated NOx by a catalyst.

Citation List

Patent Literature

PTL 1: JP S63-113206 A
PTL 2: JP 2017-219235 A

Further related art may be found in JPS6446516A which describes a burner for a radiant tube and in JPH04126905A which describes a low-NOx burner.

Summary of Invention

Technical Problem

However, PTL 1 requires the fan to guide the exhaust gas to the fuel gas or the secondary combustion air. For example, the installation of the fan for each radiant tube adversely affects maintainability. Further, the configuration of PTL 1 also has a problem that the radiant tube increases in size due to the provision of the fan.

PTL 2 has a problem of the deterioration of the catalyst due to poisoning, which is remarkable in the steel industry using by-product gas. Further, the configuration of PTL 2 also has a problem that the radiant tube increases in size due to the provision of the catalyst.

The present invention has been made focusing on the above-described respects. It is an object of the present invention to provide a radiant tube burner and a radiant tube capable of reducing the generation of NOx with a simple configuration without adversely affecting maintainability and causing a reduction in a low NOx effect due to poisoning or the like. The present invention is defined by appended independent claim 1. The dependent claims describe optional features and distinct embodiments.

Solution to Problem

To develop a low NOx radiant tube burner, the present inventors have conducted various combustion analyses including the generation of NOx around a burner, irrespective of the shapes of existing radiant tubes. From the results, the present inventors have obtained a finding that the opening cross-sectional shape of the radiant tube is set to be an oval shape having a long diameter and a short diameter different from each other, a secondary combustion air nozzle is arranged in the center of the radiant tube, a plurality of fuel gas nozzles and a plurality of primary combustion air nozzles are arranged along the circumferential direction around the secondary combustion air nozzle, and then primary combustion is performed at an air ratio of 1.0 or less, so that a circulation flow is generated in a primary combustion area around the burner and the NOx concentration on the front side of the burner decreases. Further, the present inventors have found that the NOx concentration further decreases by appropriately dividing the flow rate of primary combustion air injected from the plurality of primary combustion air nozzles between the long diameter side and the short diameter side of the tube-like oval. The present invention has been made based on such findings.

To solve the problems, one aspect of the present invention is a radiant tube burner which is inserted and installed in a tube having an oval-shaped opening cross section and which has a gas injection unit having a secondary combustion air nozzle injecting secondary combustion air arranged in a center portion and a plurality of primary combustion air nozzles injecting primary combustion air and a plurality of fuel gas nozzles injecting fuel gas arranged to surround the secondary combustion air nozzle, in which the opening cross section of the tube is virtually divided into four areas with two straight lines as the boundaries, the two straight lines being obtained by tilting the minor axis of the oval, which is the shape of the opening cross section, by $\pm 45°$ with the center of the oval as the center, and the flow rate of the primary combustion air injected from the primary combustion air nozzles located in the areas containing the minor axis of the oval of the virtually divided four areas is lower than the flow rate of the primary combustion air injected from the primary combustion air nozzles located in the areas not containing the minor axis of the oval of the four areas.

Advantageous Effects of Invention

The aspect of the present invention can provide a radiant tube burner and a radiant tube capable of reducing the generation of NOx with a simple configuration.

Brief Description of Drawings

FIG. 1 is a schematic diagram for explaining the configuration of a radiant tube including a radiant tube burner according to an embodiment based on the present invention;

FIG. 2 is a view for explaining the opening cross-sectional shape of the tube illustrated in the A-A' cross section of FIG. 1;

FIG. 3 is a schematic perspective view illustrating the relationship between a gas injection unit of the radiant tube burner and the tube;

FIG. 4 is a conceptual diagram illustrating each nozzle of the gas injection unit;

FIG. 5 is a front view illustrating the arrangement relationship between four areas and each nozzle;

FIG. 6 is a view illustrating the relationship between the flow rate ratio and the NOx ratio; and

FIG. 7 is a view illustrating the relationship between the flow rate ratio and the combustion gas temperature on the minor axis side.

Description of Embodiments

Embodiments of the present invention will now be described with reference to the drawings.

Herein, the drawings are schematic, and ratios or the like of the size and the length of each part are different from the actual ratios or the like of the size and the length. The embodiments described below exemplify the configuration for embodying the technical idea of the present invention. The technical idea of the present invention does not specify materials, shapes, structures, and the like of constituent parts to the materials, shapes, structures, and the like described below. The technical idea of the present invention can be variously altered within the technical scope specified by Claims.

Herein, in the present specification, an oval does not include a perfect circle, and a short diameter of the oval refers to the shortest diameter and a long diameter refers to the diameter in the direction orthogonal to the short diameter. A minor axis is an axis extending in the short diameter direction. A major axis is an axis extending in the long diameter direction.

(Configuration)

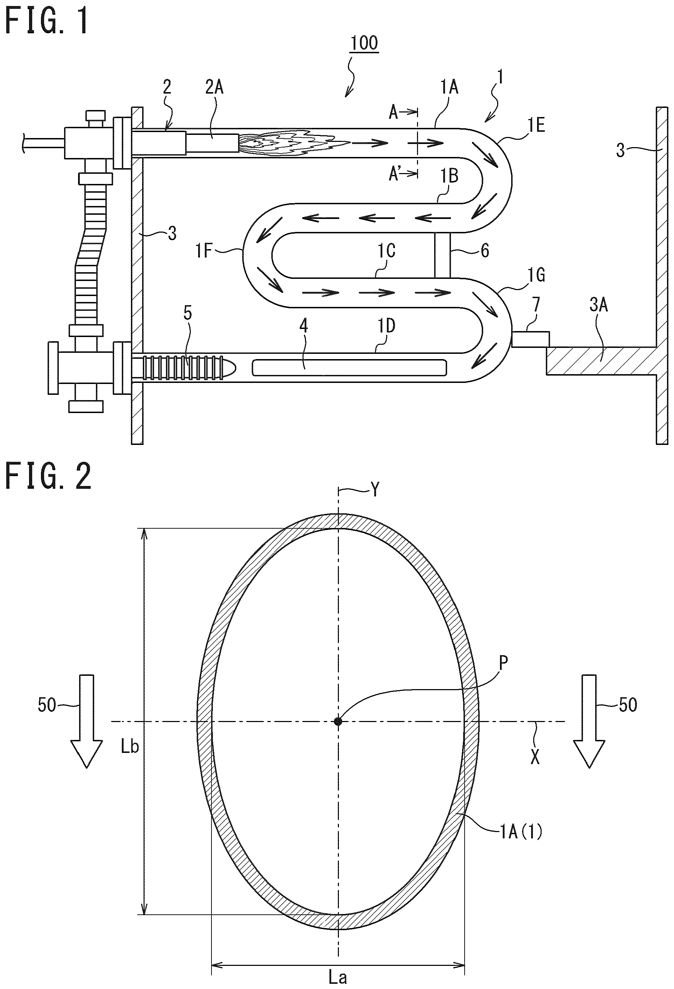

As illustrated in FIG. 1, a radiant tube 100 of this embodiment includes a tube 1 through which combustion gas flows and a radiant tube burner 2 generating the combustion gas in the tube 1. The radiant tube 100 may or may not include a heat transfer promoter 4, various exhaust heat recovery devices 5, such as a recuperator and a heat storage burner, and other known parts.

EP 4 105 554 B1

(Tube 1)

As illustrated in FIG. 1, the tube 1 of this embodiment has a zigzag shape with a substantially W-shaped side view and has vertically arranged four straight tube portions 1A to 1D, and is configured by connecting end portions of the straight tube portions 1A to 1D adjacent to each other by curved tube portions 1E to 1G extending in an arc shape. The reference numeral 6 indicates a separator member preventing the space between the adjacent straight tube portions from narrowing. The reference numeral 7 indicates a support member supported by a protruding portion 3A and suppressing the downward displacement of the tube.

The tube 1 is supported by a furnace wall 3 by the fixation of the inlet side of the straight tube portion 1A at the most upstream position and the outlet side of the straight tube portion 1D at the most downstream position to the furnace wall 3.

The opening cross section of at least the straight tube portion 1A at the most upstream position of the tube 1 has an oval shape in which a short diameter La and a long diameter Lb are different from each other as illustrated in FIG. 2. More specifically, the opening cross section of the straight tube portion 1A at the most upstream position where a gas injection unit 2A of the radiant tube burner 2 is arranged has the oval shape in which the short diameter La and the long diameter Lb are different from each other. In this embodiment, the oval shape has an oval shape in which a major axis Y is vertically directed over the entire length of the tube 1.

More specifically, the tube 1 is set such that the major axis Y which is the axis of the long diameter orthogonal to the short diameter of the oval above is directed in the vertical direction. By arranging the tube 1 such that the major axis Y of the oval is directed in the vertical direction, the rigidity of the tube 1 is improved as compared with a case where the opening cross-sectional shape of the tube 1 is a perfect circle shape, and the downward displacement of the straight tube portions 1A to 1D constituting the tube 1 due to the self-weight or a thermal load can be suppressed.

The oval defining the cross section of the tube is not particularly limited because, when the lengths of the short diameter La and the long diameter Lb are different from each other, the rigidity is improved as compared with the perfect circular shape. In the oval, (Long diameter Lb/Short diameter La) is set to be 1.1 or more and 1.4 or less, for example.

Herein, this embodiment has a configuration in which an object to be heated (not illustrated) vertically moves in the front and the rear of the tube 1, so that the object to be heated is heated by radiant heat from the radiant tube 100. In FIG. 2, the reference numeral 50 indicates an example of the moving direction of the object to be heated.

(Radiant tube burner 2)

In the radiant tube burner 2, the gas injection unit 2A is inserted coaxially with the straight tube portion 1A from an upstream side end portion of the straight tube portion 1A in the straight tube portion 1A at the most upstream position as illustrated in FIG. 1. The gas injection unit 2A is a header portion where nozzles injecting combustion air and fuel gas are formed.

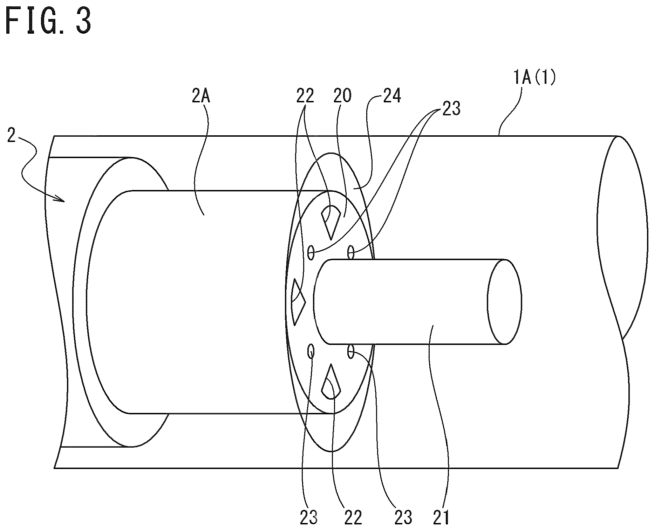

As illustrated in FIG. 3, the gas injection unit 2A of this embodiment has a columnar outer shape and is arranged such that a center p-axis of the columnar shape and a center p-axis of the tube 1 are coaxial with each other.

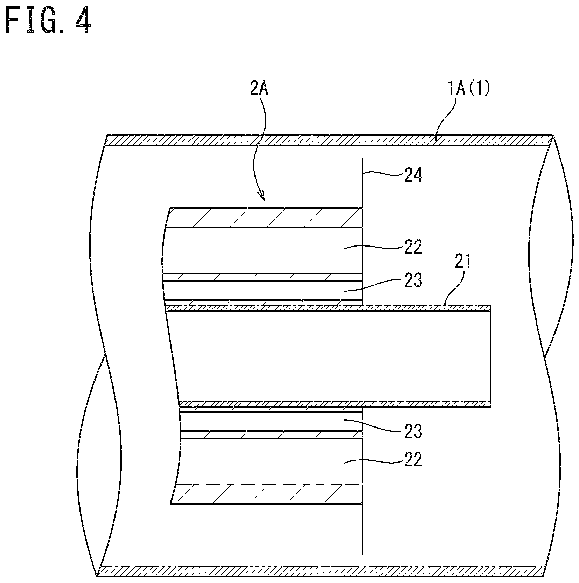

In a tip portion of the gas injection unit 2A, a secondary combustion air nozzle 21, a plurality of primary combustion air nozzles 22, and a plurality of fuel gas nozzles 23 are provided. Hereinafter, the surface of the tip portion of the gas injection unit 2A is also referred to as a gas injection surface. As illustrated in FIG. 4, the gas injection axis of each nozzle is set parallel to the center p-axis of the gas injection unit 2A, and gas can be injected in the same direction as the extending direction of the tube 1.

Herein, the secondary combustion air nozzle 21 is a nozzle injecting secondary combustion air. The primary combustion air nozzle 22 is a nozzle injecting primary combustion air. The fuel gas nozzle 23 is a nozzle injecting fuel gas.

As illustrated in FIGS. 3 to 5, the secondary combustion air nozzle 21 is arranged in a center portion of the gas injection surface of a circular shape and is constituted by a cylinder portion extending forward (gas injection direction) from the gas injection surface. The secondary combustion air nozzle 21 of this embodiment is set to be coaxial with the gas injection unit 2A.

Further, on the gas injection surface, the plurality of primary combustion air nozzles 22 and the plurality of fuel gas nozzles 23 are arranged to surround the outer periphery of the secondary combustion air nozzle 21 at the outward position in the outer diameter direction of the secondary combustion air nozzle 21. In the gas injection surface, holes are opened for the formation of tip portion openings of the plurality of primary combustion air nozzles 22 and the plurality of fuel gas nozzles 23.

This embodiment gives an example in which the plurality of primary combustion air nozzles 22 is provided to be point-symmetric with the center portion of the gas injection surface (center p of the oval) as the center; two primary combustion air nozzles 22 are provided on the left and right and two primary combustion air nozzles 22 are provided on the top and the bottom (four primary combustion air nozzles 22 in total). Each fuel gas nozzle 23 is arranged between the adjacent primary combustion air nozzles 22 along the circumferential direction.

The reference numeral 24 indicates a back plate, and the shape of the back plate 24 is an oval shape similar to the oval shape of the tube 1.

(Primary combustion air)

The flow rate of a total air quantity mx of the primary combustion air injected from all of the primary combustion air nozzles 22 is set such that the primary combustion is performed at an air ratio of 1.0 or less.

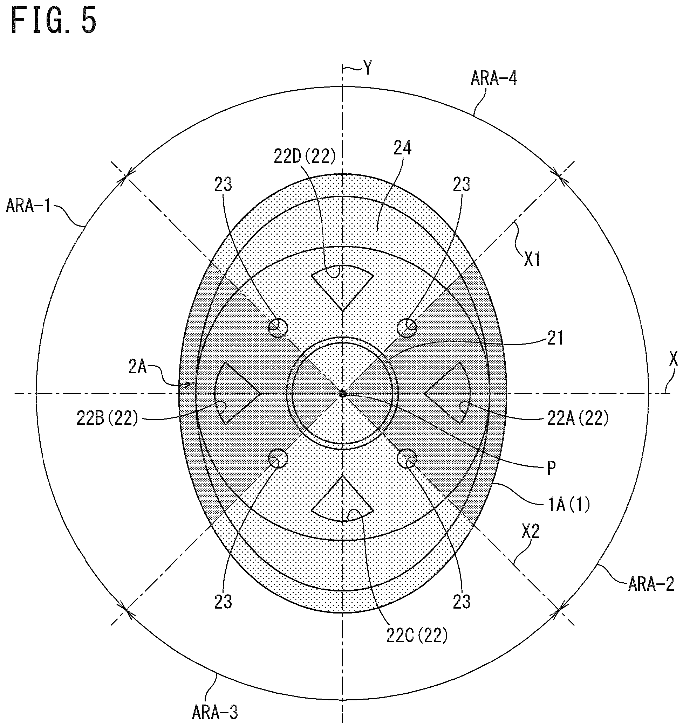

In this embodiment, as illustrated in FIG. 5, the opening cross section of the straight tube portion at the most upstream position is virtually divided into four areas ARA-1 to ARA-4 with two straight lines X1, X2 as the boundaries, the two straight lines X1, X2 being obtained by tilting a minor axis X as the axis of the short diameter of the oval, which is the opening cross-sectional shape of the straight tube portion at the most upstream position, by ±45° with the center P of the oval as the center.

A flow rate mt of the primary combustion air injected from the primary combustion air nozzles 22A, 22B located in the areas ARA-1, ARA-2 containing the minor axis X of the oval is set to be lower than the flow rate of the primary combustion air injected from the primary combustion air nozzles 22C, 22D located in the areas ARA-3, ARA-4, respectively, not containing the minor axis X of the oval (hereinafter, also referred to as the area containing the major axis Y). More specifically, a flow rate ratio (mt/mx) is set to less than 0.5, the flow rate ratio which is a ratio of the flow rate mt of the primary combustion air injected from the primary combustion air nozzles 22A, 22B located in the areas ARA-1, ARA-2 containing the minor axis X of the oval to the total air quantity mx of the primary combustion air injected from all of the primary combustion air nozzles 22. Preferably, the flow rate ratio (mt/mx) is set to 0.45 or less.

In this embodiment, the flow rate ratio (mt/mx) is set to be equal to or larger than $La^2/(La^2 + Lb^2)$. Preferably, the flow rate ratio (mt/mx) is set to be equal to or larger than $La/(La + Lb)$.

More specifically, in this embodiment, the flow rate distribution of the primary combustion air is designed to satisfy Equation (1) below.

$$La^2/(La^2 + Lb^2) \leq (mt/mx) < 0.5 \qquad (1)$$

Herein, in this embodiment, as a configuration of reducing the flow rate mt of the primary combustion air from the primary combustion air nozzles 22A, 22B on the minor axis X side to be lower than the flow rate of the primary combustion air from the primary combustion air nozzles 22C, 22D on the major axis Y side, the total opening cross-sectional area of the primary combustion air nozzles 22 located in the areas ARA-1, ARA-2 containing the minor axis X of the oval is set to be smaller than the total opening cross-sectional area of the primary combustion air nozzles 22 located in the areas ARA-3, ARA-4 containing the major axis Y of the oval, and a ratio between the two total opening areas is adjusted such that a flow rate ratio satisfying Equation (1) is achieved.

As a configuration of setting the flow rate mt of the primary combustion air injected from the primary combustion air nozzles 22A, 22B on the minor axis X side to be lower than the flow rate of the primary combustion air from the primary combustion air nozzles 22C, 22D on the major axis Y side, there is also a method for adjusting the blending ratio by independently providing a supply path for each combustion air on the minor axis X side and the major axis Y side and individually supplying the combustion air or providing a flow rate control valve in the middle of the flow path. However, the configuration of adjusting the opening area ratio between the two nozzles is simple.

The flow rates of the primary combustion air from the areas ARA-1 to ARA-4 (upper and lower areas, left and right areas) that are point-symmetric with respect to the center p of the oval are preferably equal to each other. More specifically, the flow rate of the primary combustion air supplied from the upper area ARA-4 is set to be equal to the flow rate of the primary combustion air supplied from the lower area ARA-3. The flow rate of the primary combustion air supplied from the area ARA-1 on the left side and the flow rate of the primary combustion air supplied from the area ARA-2 on the right side are set to be equal to each other.

(Nozzle arrangement)

Herein, FIG. 5 illustrates a case where one primary combustion air nozzle 22 is arranged in each of the four areas ARA-1 to ARA-4 but the present invention is not limited thereto. For example, two or more primary combustion air nozzles 22 may be arranged in each of the areas ARA-1 to ARA-4.

Further, FIG. 5 illustrates a case where each primary combustion air nozzle 22 is arranged on the major axis Y or the minor axis X of the oval shape, but the present invention is not limited thereto. For example, each primary combustion air nozzle 22 does not have to be arranged to overlap on the major axis Y or the minor axis X.

FIG. 5 illustrates, as the opening shape of the hole constituting the primary combustion air nozzles 22, a fan shape in which the distance in the circumferential direction increases as away from the center p of the oval in the outer diameter direction but the present invention is not limited thereto. For example, the opening shape of the hole constituting the primary combustion air nozzle 22 is not particularly limited and may be a shape other than the fan shape.

The distance from the center p of the oval to each primary combustion air nozzle 22 may be set to be different between the primary combustion air nozzles 22A, 22B on the minor axis X side and the primary combustion air nozzles 22C, 22D on the major axis Y side.

(Operation and others)

In the radiant tube 100 of this embodiment, the combustion air or the fuel gas is injected (discharged) and supplied from each nozzle of the radiant tube burner 2 in the direction parallel to the axis of the straight tube portion 1A at the most upstream position constituting the tube 1.

This embodiment employs a two-stage combustion method in which the fuel gas injected from the fuel gas nozzles 23 is mixed with the primary combustion air injected from the primary combustion air nozzles 22 and incompletely burned, and then the incompletely burned combustion gas is completely burned by the secondary combustion air discharged from the secondary combustion air nozzle 21, so that NOx is reduced. The generated combustion gas flows along the tube 1.

In this embodiment, with respect to the total amount of the primary combustion air to be supplied, the flow rate mt of the primary combustion air from the primary combustion air nozzles 22A, 22B on the minor axis X side which is the axis of the short diameter is set to be relatively lower than the flow rate of the primary combustion air from the primary combustion air nozzles 22C, 22D on the major axis side which is the axis of the long diameter orthogonal to the short diameter, so that the generation of NOx due to combustion is further suppressed.

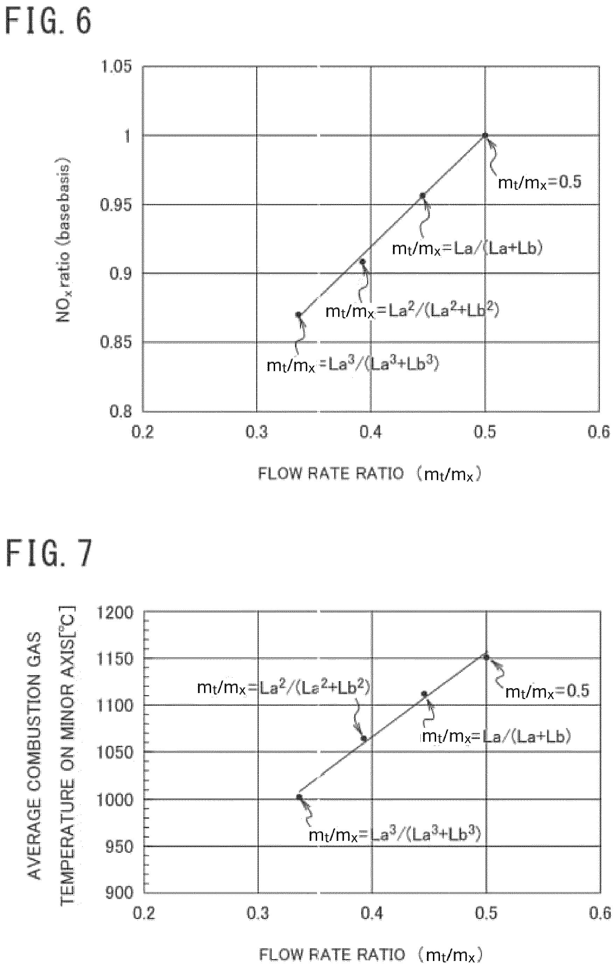

Herein, the opening cross-sectional shape of the tube 1 was set to an oval (Short diameter La: 188 mm, Long diameter Lb: 236 mm), and then the relationship between the flow rate ratio (mt/mx) and NOx was analyzed by an NOx generation prediction simulation using the finite volume method. The results are illustrated in FIG. 6.

In FIG. 6, the horizontal axis represents the flow rate ratio (mt/mx) and the vertical axis represents the NOx ratio when normalized by setting the amount of NOx generated in the case of mt/mx = 0.5 as 1 (NOx generation amount).

As is understood from FIG. 6, it was found that NOx decreased when the flow rate mt of the primary combustion air from the primary combustion air nozzles 22A, 22B on the minor axis X side is set to be relatively lower than the flow rate of the primary combustion air from the primary combustion air nozzles 22C, 22D on the major axis Y side.

This is presumed to be because the discharged amounts of the primary combustion air from the adjacent areas ARA-1 to ARA-4 are different, and thus a ratio of the air to be blown is adjusted for each of the areas ARA-1 to ARA-4 and an appropriate N2 concentration distribution is achieved, which leads to the suppression of the generation of NOx.

On the other hand, when the tube shape of the radiant tube 100 is set to an oval shape, the surface on the short diameter La side where the area is relatively large is preferably made to face an object to be heated in consideration of the radiation area with the object to be heated. The reduction in the amount of the air injected to the short diameter La side as in this embodiment increases the occurrence of non-combustion in the areas ARA-1, ARA-2 on the short diameter La side, and thus poses a risk that the surface temperature on the short diameter La side of the radiant tube 100 decreases, so that the heat transfer efficiency decreases.

Thus, when the relationship between the flow rate ratio and the average combustion gas temperature on the minor axis X was determined, the results illustrated in FIG. 7 were obtained.

FIG. 7 illustrates the determination of the average temperature on the minor axis X in the oval of a cross section perpendicular to the flow direction at a point 2000 mm away in the injection direction from the primary combustion air nozzles 22 and the fuel gas nozzles 23, i.e., ejection surface.

As is understood from FIG. 7, when the flow rate ratio (mt/mx) is made smaller than 0.5, the average gas temperature on the minor axis X side further decreases.

Based on these results, the flow rate ratio (mt/mx) is preferably set to be equal to or larger than $La^2/(La^2 + Lb^2)$ and the flow rate ratio (mt/mx) is more preferably set to be equal to or larger than $La/(La + Lb)$ to prevent the reduction in heat transfer efficiency while exhibiting a low NOx effect.

As described above, this embodiment can provide the radiant tube burner 2 and the radiant tube 100 capable of reducing NOx with a simple configuration without adversely affecting the maintainability and causing a reduction in the low NOx effect due to poisoning or the like.

Herein, the entire contents of JP 2020-020549 A (filed on February 10, 2020) for which the present application claims priority form a part of the present disclosure by reference. Herein, while the present invention has been described with reference to a limited number of embodiments, the scope of the invention is not limited thereto, and modifications of each embodiment based on the disclosure above are obvious to those skilled in the art.

Reference Signs List

1 tube

1A straight tube portion at most upstream position

2 radiant tube burner

2A gas injection unit

3 furnace wall

21 secondary combustion air nozzle

22 primary combustion air nozzle

22A, 22B primary combustion air nozzle on minor axis side

22C, 22D primary combustion air nozzle on major axis side

23 fuel gas nozzle

ARA-1 to ARA-4 area

La short diameter

Lb long diameter

X minor axis

Y major axis

**Claims**

1. A radiant tube (100), comprising:

   a tube (1) having an oval-shaped opening cross section, and

   a radiant tube burner (2), which is inserted and installed in the tube and which has a gas injection unit (2A) having a secondary combustion air nozzle (21) configured to inject secondary combustion air arranged in a center portion and a plurality of primary combustion air nozzles (22) configured to inject primary combustion air and a plurality of fuel gas nozzles (23) configured to inject fuel gas arranged to surround the secondary combustion air nozzle, wherein

   the opening cross section of the tube is virtually divided into four areas with two straight lines as boundaries, the two straight lines being obtained by tilting a minor axis of the oval, which is a shape of the opening cross section, by $\pm 45°$ with a center of the oval as a center, and

   the radiant tube burner is so configured that a flow rate of the primary combustion air to be injected from the primary combustion air nozzles located in the areas containing the minor axis of the oval of the virtually divided four areas is lower than a flow rate of the primary combustion air to be injected from the primary combustion air nozzles located in the areas not containing the minor axis of the oval the four areas.

2. The radiant tube according claim 1, wherein

   the gas injection unit is a header portion, where nozzles for injecting combustion air and fuel gas are formed, and/or

   the gas injection unit has a columnar outer shape and is arranged such that a center p-axis of the columnar shape and a center p-axis of the tube 1 are coaxial with each other, and/or

   in a tip portion of the gas injection unit, the secondary combustion air nozzle, the plurality of primary combustion air nozzles, and the plurality of fuel gas nozzles are provided, and/or

   a back plate (24) having an oval shape similar to the oval shape of the tube is arranged

3. The radiant tube according to claim 1, wherein, when a short diameter of the oval is defined as La and a long diameter orthogonal to the short diameter is defined as Lb, a flow rate ratio (mt/mx) is set to be equal to or larger than $La^2/(La^2 + Lb^2)$, the flow rate ratio (mt/mx) being a ratio of a flow rate mt of the primary combustion air to be injected from the primary combustion air nozzles located in the areas containing the minor axis to a total air quantity mx of the primary combustion air to be injected from all of the primary combustion air nozzles.

4. The radiant tube according to claim 1 or 2, wherein
   the radiant tube burner is so configured that the flow rate of the primary combustion air to be injected from the primary combustion air nozzles is adjusted by a total opening cross-sectional area of the primary combustion air nozzles located in the areas containing the minor axis being smaller than a total opening cross-sectional area of the primary combustion air nozzles located in the areas not containing the minor axis of the oval.

5. A method for designing a radiant tube burner (2), which is to be inserted and installed in a tube (1) having an oval-shaped opening cross section, wherein the radiant tube burner (2) has a gas injection unit (2A) having a secondary combustion air nozzle (21) for injecting secondary combustion air arranged in a center portion and a plurality of primary combustion air nozzles (22) for injecting primary combustion air and a plurality of fuel gas nozzles (23) for injecting fuel gas arranged to surround the secondary combustion air nozzle, the method comprising:

virtually dividing the opening cross section of the tube into four areas with two straight lines as boundaries, the two straight lines being obtained by tilting a minor axis of the oval, which is a shape of the opening cross section, by $\pm 45°$ with a center of the oval as a center; and

when a short diameter of the oval is defined as La and a long diameter orthogonal to the short diameter is defined as Lb, setting a flow rate ratio (mt/mx) to satisfy Equation (1) below,

the flow rate ratio (mt/mx) being a ratio of a flow rate mt of the primary combustion air injected from the primary combustion air nozzles located in the areas containing the minor axis to a total air quantity mx of the primary combustion air injected from all of the primary combustion air nozzles,

$$La^2/(La^2 + Lb^2) \leq (mt/mx) < 0.5 \qquad (1).$$

## Patentansprüche

1. Strahlrohr (100), umfassend:

ein Rohr (1), das einen ovalförmigen Öffnungsquerschnitt aufweist, und

einen Strahlrohrbrenner (2), der in das Rohr eingesetzt und darin installiert ist und der eine Gasinjektionseinheit (2A) aufweist, die eine Sekundärverbrennungsluftdüse (21), die so konfiguriert ist, dass sie Sekundärverbrennungsluft einspritzt und in einem zentralen Abschnitt angeordnet ist, und eine Vielzahl von Primärverbrennungsluftdüsen (22), die so konfiguriert sind, dass sie Primärverbrennungsluft einspritzen, und eine Vielzahl von Brenngasdüsen (23) aufweist, die so konfiguriert sind, dass sie Brenngas einspritzen und so angeordnet sind, dass sie die Sekundärverbrennungsluftdüse umgeben, wobei

der Öffnungsquerschnitt des Rohrs virtuell in vier Bereiche mit zwei geraden Linien als Grenzen unterteilt ist, wobei die zwei geraden Linien durch Neigen einer kleinen Achse des Ovals, das eine Form des Öffnungsquerschnitts ist, um $\pm 45°$ mit einer Mitte des Ovals als Mitte erhalten werden, und

der Strahlrohrbrenner so konfiguriert ist, dass eine Strömungsgeschwindigkeit der Primärverbrennungsluft, die von den Primärverbrennungsluftdüsen eingespritzt werden soll, die in den Bereichen gelegen sind, die die kleine Achse des Ovals der virtuell unterteilten vier Bereiche enthalten, niedriger ist als eine Strömungsgeschwindigkeit der Primärverbrennungsluft, die von den Primärverbrennungsluftdüsen eingespritzt werden soll, die in den Bereichen gelegen sind, die nicht die kleine Achse des Ovals der vier Bereiche enthalten.

2. Strahlrohr nach Anspruch 1, wobei

die Gasinjektionseinheit ein Kopfabschnitt ist, in dem Düsen zum Einspritzen von Verbrennungsluft und Brenngas gebildet sind, und/oder

die Gasinjektionseinheit eine säulenförmige Außenform aufweist und so angeordnet ist, dass eine zentrale p-Achse der säulenförmigen Form und eine zentrale p-Achse des Rohrs 1 zueinander koaxial sind, und/oder

in einem Spitzenabschnitt der Gasinjektionseinheit die Sekundärverbrennungsluftdüse, die Vielzahl von Primärverbrennungsluftdüsen und die Vielzahl von Brenngasdüsen bereitgestellt sind, und/oder

eine Rückwandplatte (24), die eine ovale Form ähnlich der ovalen Form des Rohrs aufweist, angeordnet ist.

3. Strahlrohr nach Anspruch 1, wobei, wenn ein kurzer Durchmesser des Ovals als La definiert ist und ein langer Durchmesser orthogonal zu dem kurzen Durchmesser als Lb definiert ist, ein Strömungsgeschwindigkeitsverhältnis (mt/mx) auf gleich groß oder größer als $La^2/(La^2 + Lb^2)$ eingestellt wird, wobei das Strömungsgeschwindigkeitsverhältnis (mt/mx) ein Verhältnis einer Strömungsgeschwindigkeit mt der Primärverbrennungsluft, die von den Primärverbrennungsluftdüsen eingespritzt werden soll, die in den Bereichen gelegen sind, die die kleine Achse enthalten, zu einer Gesamtluftmenge mx der Primärverbrennungsluft, die von allen Primärverbrennungsluftdüsen eingespritzt werden soll, ist.

4. Strahlrohr nach Anspruch 1 oder 2, wobei
der Strahlrohrbrenner so konfiguriert ist, dass die Strömungsgeschwindigkeit der Primärverbrennungsluft, die von den Primärverbrennungsluftdüsen eingespritzt werden soll, durch eine Gesamtquerschnittsfläche der Öffnung der Primärverbrennungsluftdüsen, die in den Bereichen gelegen sind, die die kleine Achse enthalten, so angepasst wird, dass sie kleiner ist als eine Gesamtquerschnittsfläche der Öffnung der Primärverbrennungsluftdüsen, die in den Bereichen gelegen sind, die nicht die kleine Achse des Ovals enthalten.

**5.** Verfahren zum Entwerfen eines Strahlrohrbrenners (2), der in ein Rohr (1) eingesetzt und darin installiert werden soll, das einen ovalförmigen Öffnungsquerschnitt aufweist, wobei der Strahlrohrbrenner (2) eine Gasinjektionseinheit (2A) aufweist, die eine Sekundärverbrennungsluftdüse (21) zum Einspritzen von Sekundärverbrennungsluft, die in einem zentralen Abschnitt angeordnet ist, und eine Vielzahl von Primärverbrennungsluftdüsen (22) zum Einspritzen von Primärverbrennungsluft und eine Vielzahl von Brenngasdüsen (23) zum Einspritzen von Brenngas aufweist, die so angeordnet sind, dass sie die Sekundärverbrennungsluftdüse umgeben, wobei das Verfahren Folgendes umfasst:

virtuelles Teilen des Öffnungsquerschnitts des Rohrs in vier Bereiche mit zwei geraden Linien als Grenzen, wobei die zwei geraden Linien durch Neigen einer kleinen Achse des Ovals, das eine Form des Öffnungsquerschnitts ist, um $\pm 45°$ mit einer Mitte des Ovals als Mitte erhalten werden; und
wenn ein kurzer Durchmesser des Ovals als La definiert ist und ein langer Durchmesser orthogonal zu dem kurzen Durchmesser als Lb definiert ist, Einstellen eines Strömungsgeschwindigkeitsverhältnisses (mt/mx) so, dass sie die untenstehende Gleichung (1) erfüllt,
wobei das Strömungsgeschwindigkeitsverhältnis (mt/mx) ein Verhältnis einer Strömungsgeschwindigkeit mt der Primärverbrennungsluft, die von den Primärverbrennungsluftdüsen eingespritzt wird, die in den Bereichen gelegen sind, die die kleine Achse enthalten, zu einer Gesamtluftmenge mx der Primärverbrennungsluft, die von allen Primärverbrennungsluftdüsen eingespritzt wird, ist,

$$La^2/ (La^2 + Lb^2) \leq (mt/mx) < 0{,}5 \qquad (1).$$

## Revendications

**1.** Tube radiant (100), comprenant :

un tube (1) présentant une section transversale d'ouverture de forme ovale, et
un brûleur à tube radiant (2), qui est inséré et installé dans le tube et qui présente une unité d'injection de gaz (2A) présentant une buse d'air de combustion secondaire (21) configurée pour injecter un air de combustion secondaire agencée dans une partie centrale et une pluralité de buses d'air de combustion primaire (22) configurées pour injecter un air de combustion primaire et une pluralité de buses de gaz combustible (23) configurées pour injecter un gaz combustible agencées de manière à entourer la buse d'air de combustion secondaire, dans lequel
la section transversale d'ouverture du tube est virtuellement divisée en quatre zones avec deux lignes droites en tant que limites, les deux lignes droites étant obtenues en inclinant un axe mineur de l'ovale, qui est une forme de la section transversale d'ouverture, de $\pm 45°$ avec un centre de l'ovale en tant qu'un centre, et
le brûleur à tube radiant est configuré de manière à ce qu'un débit de l'air de combustion primaire à injecter depuis les buses d'air de combustion primaire situées dans les zones contenant l'axe mineur de l'ovale des quatre zones virtuellement divisées soit inférieur à un débit de l'air de combustion primaire à injecter depuis les buses d'air de combustion primaire situées dans les zones ne contenant pas l'axe mineur de l'ovale des quatre zones.

**2.** Tube radiant selon la revendication 1, dans lequel

l'unité d'injection de gaz est une partie de tête, où les buses pour l'injection d'air de combustion et de gaz combustible sont formées, et/ou
l'unité d'injection de gaz présente une forme externe colonnaire et est agencée de manière à ce qu'un axe p central de la forme colonnaire et qu'un axe p central du tube 1 soient coaxiaux l'un par rapport à l'autre, et/ou
dans une partie d'extrémité de l'unité d'injection de gaz, la buse d'air de combustion secondaire, la pluralité de buses d'air de combustion primaire, et la pluralité de buses de gaz combustible sont prévues, et/ou
une plaque arrière (24) présentant une forme ovale similaire à la forme ovale du tube est agencée.

**3.** Tube radiant selon la revendication 1, dans lequel, lorsqu'un diamètre court de l'ovale est défini comme La et un diamètre long orthogonal au diamètre court est défini comme Lb, un rapport de débit (mt/mx) est réglé pour être égal à

ou supérieur à $La^2 / (La^2 + Lb^2)$, le rapport de débit (mt/mx) étant un rapport entre un débit mt de l'air de combustion primaire à injecter depuis les buses d'air de combustion primaire situées dans les zones contenant l'axe mineur et une quantité d'air totale mx de l'air de combustion primaire à injecter depuis toutes les buses d'air de combustion primaire.

**4.** Tube radiant selon la revendication 1 ou 2, dans lequel
le brûleur à tube radiant est configuré de manière à ce que le débit de l'air de combustion primaire à injecter depuis les buses d'air de combustion primaire soit ajusté par une zone transversale d'ouverture totale des buses d'air de combustion primaire situées dans les zones contenant l'axe mineur étant plus petite qu'une zone transversale d'ouverture totale des buses d'air de combustion primaire situées dans les zones ne contenant pas l'axe mineur de l'ovale.

**5.** Procédé de conception d'un brûleur à tube radiant (2), destiné à être inséré et installé dans un tube (1) présentant une section transversale d'ouverture de forme ovale dans lequel le brûleur à tube radiant (2) présente une unité d'injection de gaz (2A) présentant une buse d'air de combustion secondaire (21) pour l'injection d'un air de combustion secondaire agencée dans une partie centrale et une pluralité de buses d'air de combustion primaire (22) pour l'injection d'un air de combustion primaire et une pluralité de buses de gaz combustible (23) pour l'injection d'un gaz combustible agencées de manière à entourer la buse d'air de combustion secondaire, le procédé comprenant :

la division virtuelle de la section transversale d'ouverture du tube en quatre zones avec deux lignes droites en tant que limites, les deux lignes droites étant obtenues en inclinant un axe mineur de l'ovale, qui est une forme de la section transversale d'ouverture, de $\pm 45°$ avec un centre de l'ovale en tant qu'un centre, et
lorsqu'un diamètre court de l'ovale est défini comme La et qu'un diamètre long orthogonal au diamètre court est défini comme Lb, le réglage d'un rapport de débit (mt/mx) pour satisfaire l'Équation (1) ci-dessous,
le rapport de débit (mt/mx) étant un rapport entre un débit mt de l'air de combustion primaire injecté depuis les buses d'air de combustion primaire situées dans les zones contenant l'axe mineur et une quantité d'air totale mx de l'air de combustion primaire injectée depuis toutes les buses d'air de combustion primaire.

$$La^2 / (La^2 + Lb^2) \le (mt/mx) < 0{,}5 \qquad (1).$$

# FIG. 1

# FIG. 2

FIG. 3

# FIG. 4

# FIG. 5

## FIG. 6

FLOW RATE RATIO $(m_t/m_x)$

## FIG. 7

FLOW RATE RATIO $(m_t/m_x)$

**EP 4 105 554 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63113206 A
- JP 2017219235 A
- JP 2020020549 A